# EUROPEAN PATENT APPLICATION

(11) **EP 4 776 566 A1**
(43) Date of publication of application: **15.07.2026**
(21) Application number: 24864751.3
(22) Date of filing: 13.09.2024
(51) Int. Cl.: H04L 9/40, H04L 9/08

(54) **KEY MANAGEMENT METHOD, APPARATUS, AND SYSTEM, DEVICE, AND STORAGE MEDIUM**

(30) Priority: 13.09.2023 CN 202311185647
(71) Applicant: CHINA MOBILE INTERNET CO., LTD, Guangdong 510700 (CN); CHINA MOBILE COMMUNICATIONS GROUP CO., LTD., Beijing 100032 (CN)
(72) Inventor: XU, Ying, Guangzhou, Guangdong 510700 (CN); HUANG, Jianwen, Guangzhou, Guangdong 510700 (CN); SUN, Wenqing, Guangzhou, Guangdong 510700 (CN); WANG, Jun, Guangzhou, Guangdong 510700 (CN); CHEN, Junwen, Guangzhou, Guangdong 510700 (CN); CHEN, Qiuhua, Guangzhou, Guangdong 510700 (CN); LIU, Hui, Guangzhou, Guangdong 510700 (CN); LUO, Fuwei, Guangzhou, Guangdong 510700 (CN); HU, Nengpeng, Guangzhou, Guangdong 510700 (CN); LAI, Yunan, Guangzhou, Guangdong 510700 (CN)
(74) Representative: J A Kemp LLP
(86) International application number: PCT/CN2024/118844
(87) International publication number: WO 2025/056036

(57) **Abstract**

The present application discloses a key management method, apparatus, and system, a device, and a storage medium. The method is applied to a network-side device. The method comprises: acquiring a key acquisition request sent by a terminal device; performing security verification on the key acquisition request; in response to the key acquisition request passing the security verification, updating a login key of a first device to a first key; and sending the first key to the terminal device. By means of the technical solution of the present application, different users can each use a different key to control the same device, so that key leakage is effectively prevented, thereby achieving high-security key authorization management.

## Description

### CROSS-REFERENCE TO RELATED APPLICATIONS

This application claims priority to Chinese patent application No. 202311185647.1 filed at China National Intellectual Property Administration (CNIPA) on September 13, 2023 and entitled "METHOD, APPARATUS AND SYSTEM FOR KEY MANAGEMENT, DEVICE, AND STORAGE MEDIUM", the disclosure of which is hereby incorporated by reference in its entirety.

### TECHNICAL FIELD

The application relates to the technical field of data security, and in particular to a method, apparatus and system for key management, a device, and a storage medium.

### BACKGROUND

In the related art, keys are centrally managed by using Multi-Factor Authentication (MFA), Single Sign-On (SSO), Unified Identity Management (UIM) or other solutions usually. However, the above technical solutions require establishment of complex review rules and user identity information protection rules, to ensure reliability and security of the system, and may result in key leakage when the system is attacked.

### SUMMARY

In order to at least partially solve problems existed in the related art, the application provides a method, apparatus and system for key management, a device, and a storage medium.

According to a first aspect, an embodiment of the application provides a method for key management, the method is applied to a network side device, and the method includes the following operations. A key acquisition request sent by a terminal device is acquired. Security verification is performed on the key acquisition request. A login key of a first device is updated to a first key, in response to the key acquisition request passing the security verification. The first key is sent to the terminal device.

In an implementation, the operation of updating the login key of the first device to the first key may include the following operations. The first key is generated. A container instance is created. The login key of the first device is modified to the first key, based on the container instance. The container instance is destroyed.

In an optional implementation, the operation of generating the first key may include the following operations. A random number seed and a preset second key are acquired. The second key is encrypted based on the random number seed, to acquire an encrypted result. A message digest of the encrypted result is acquired as the first key.

In an implementation, the operation of sending the first key to the terminal device may include the following operations. The first key is encrypted based on a Chinese national cryptographic algorithm. The encrypted first key is sent to the terminal device, based on a guaranteed delivery message.

In an optional implementation, the method may further include the following operations. Whether the first key has been used for logging into the first device, is determined. The login key of the first device is updated to a third key, in response to the first key having been used for logging into the first device.

In an optional implementation, the method may further include the following operations. A key application information sent by the terminal device is acquired. Risk control analysis is performed based on the key application information, to acquire a risk control analysis result. A key acquisition link is generated, in response to the risk control analysis result being normal. The key acquisition link is sent to the terminal device. The operation of acquiring the key acquisition request sent by the terminal device may include the following operations. The key acquisition request sent by the terminal device through the key acquisition link is acquired.

In an embodiment, the key application information may include at least one of: a first identifier information of a first object, here the first object is an object submitting the key application information through the terminal device; an identification information of the first device; a first login account of the first device; a control start time of controlling the first device; or a control duration of controlling the first device.

In an embodiment, the operation of determining whether the first key has been used for logging into the first device may include the following operations. A second login account sent by the first device is acquired. Whether the first key has been used for logging into the first device, is determined according to the first login account and the second login account.

In an embodiment, the operation of performing the risk control analysis based on the key application information may include the following operations. A controllable time period and a first device information of the first device are determined according to the identification information. Whether the first object has authority to apply for a key, is determined according to the first identifier information and the control duration. An applicable operation duration of the first object and a second device information of an applicable operation device for the first object are determined according to the first identifier information, in response to the first object having authority to apply for a key. The risk control analysis is performed according to the control start time, the controllable time period, the applicable operation duration, the first device information and the second device information.

In an embodiment, the operation of determining the applicable operation duration of the first object and the second device information of the applicable operation device for the first object, according to the first identifier information may include the following operations. An association information of the first object is determined according to the first identifier information. A weight value is determined based on the association information. A target object level of the first object is determined from multiple preset object levels according to the weight value, here each of the object levels corresponds to a different applicable operation duration and a different applicable operation device respectively. The applicable operation duration and the second device information are determined according to the target object level.

In an embodiment, the association information may include at least one of: years of work experience of the first object; an associated project information of the first object; a project reuse information of the first object; an own attribute information of the first object; or an abnormal operation information of the first object.

In an embodiment, the operation of generating the key acquisition link may include the following operations. A first link is generated, here the first link corresponds to a key acquisition entry. An encrypted identifier is generated based on the key application information. The encrypted identifier is attached to the first link, to obtain the key acquisition link. The key acquisition link is sent to the terminal device.

In an embodiment, the key acquisition request may include at least one of a digital signature encrypted by using a preset public key, the encrypted identifier, or a second identifier information of the terminal device, and the operation of performing the security verification on the key acquisition request may include the following operations. Identity authentication is performed based on the second identifier information of the terminal device. Whether a sending time of the key acquisition request is in a preset validity period, is determined in response to the second identifier information passing the identity authentication. The encrypted digital signature is decrypted based on a preset private key to acquire a first hash value, in response to the sending time of the key acquisition request being in the validity period. A hash calculation is performed based on the encrypted identifier, to acquire a second hash value. The first hash value is matched with the second hash value, to acquire a matching result. It is determined that the key acquisition request passes the security verification, in response to the matching result meeting a first condition.

According to a second aspect, an embodiment of the application provides a method for key management, the method is applied to a terminal device, and the method includes the following operations. A key acquisition request is sent to a network side device, here the key acquisition request is used by the network side device to update a login key of a first device to a first key, after the key acquisition request passes security verification. The first key sent by the network side device is received.

In an implementation, the method may further include the following operations. A key application information is sent to the network side device, here the key application information is used by the network side device to send a key acquisition link to the terminal device, after the key application information passes risk control analysis. The key acquisition link sent by the network side device is received, here the key acquisition link is attached with an encrypted identifier. The operation of sending the key acquisition request to the network side device may include the following operations. The key acquisition request is sent to the network side device through the key acquisition link.

In an optional implementation, the key application information may include at least one of: a first identifier information of a first object, here the first object is an object submitting the key application information through the terminal device; an identification information of the first device; a first login account of the first device; a control start time of controlling the first device; or a control duration of controlling the first device.

In an optional implementation, the key acquisition link may be attached with an encrypted identifier, and the operation of sending the key acquisition request to the network side device may include the following operations. A hash calculation is performed based on the encrypted identifier, to obtain a first hash value. The first hash value is signed based on a preset public key, to acquire a digital signature. The encrypted identifier and/or the digital signature as the key acquisition request is sent to the network side device. In an implementation, the operation of receiving the first key sent by the network side device may include the following operations. The first key sent by the network side device through a guaranteed delivery message is acquired, here the first key is a key encrypted based on a Chinese national cryptographic algorithm.

In an implementation, the method may further include the following operations. The first key is decrypted based on the Chinese national cryptographic algorithm. A display interface is provided, here the display interface is configured to display the decrypted first key. The decrypted first key is deleted, in response to the decrypted first key being known.

According to a third aspect, an embodiment of the application provides a method for key management, the method is applied to a first device, and the method includes the following operations. In response to performing a login operation on the first device, a second login account corresponding to the login operation is sent to the network side device, here the second login account is used by the network side device to update a login key of the first device to a first key, and determine whether the first key has been used for logging into the first device.

According to a fourth aspect, an embodiment of the application provides an apparatus for key management, the apparatus is applied to a network side device, and the apparatus includes a first acquisition module, a verification module, a processing module and a first sending module. The first acquisition module is configured to acquire a key acquisition request sent by a terminal device. The verification module is configured to perform security verification on the key acquisition request. The processing module is configured to update a login key of a first device to a first key, in response to the key acquisition request passing the security verification. The first sending module is configured to send the first key to the terminal device.

In an implementation, the apparatus may further include a second acquisition module, a risk control module, a generation module and a second sending module. The second acquisition module is configured to acquire a key application information sent by the terminal device. The risk control module is configured to perform risk control analysis based on the key application information, to acquire a risk control analysis result. The generation module is configured to generate a key acquisition link, in response to the risk control analysis result being normal. The second sending module is configured to send the key acquisition link to the terminal device. The first acquisition module is specifically configured to acquire the key acquisition request sent by the terminal device through the key acquisition link.

In an optional implementation, the key application information may include at least one of: a first identifier information of a first object, here the first object is an object submitting the key application information through the terminal device; an identification information of the first device; a first login account of the first device; a control start time of controlling the first device; or a control duration of controlling the first device.

In an embodiment, the risk control module may be specifically configured to: determine a controllable time period and a first device information of the first device according to the identification information; determine whether the first object has authority to apply for a key, according to the first identifier information and the control duration; determine an applicable operation duration of the first object and a second device information of an applicable operation device for the first object according to the first identifier information, in response to the first object having authority to apply for a key; and perform the risk control analysis according to the control start time, the controllable time period, the applicable operation duration, the first device information and the second device information.

In an embodiment, the risk control module may be specifically configured to: determine an association information of the first object according to the first identifier information; determine a weight value based on the association information; determine a target object level of the first object from multiple preset object levels according to the weight value, here each of the object levels corresponds to a different applicable operation duration and a different applicable operation device respectively; and determine the applicable operation duration and the second device information according to the target object level.

In an embodiment, the association information may include at least one of: years of work experience of the first object; an associated project information of the first object; a project reuse information of the first object; an own attribute information of the first object; or an abnormal operation information of the first object.

In an optional implementation, the generation module may be specifically configured to: generate a first link, here the first link corresponds to a key acquisition entry; generate an encrypted identifier based on the key application information; attach the encrypted identifier to the first link, to obtain the key acquisition link; and send the key acquisition link to the terminal device.

In an embodiment, the key acquisition request may include at least one of a digital signature encrypted by using a preset public key, the encrypted identifier, or a second identifier information of the terminal device, and the verification module may be specifically configured to: perform identity authentication based on the second identifier information of the terminal device; determine whether a sending time of the key acquisition request is in a preset validity period, in response to the second identifier information passing the identity authentication; decrypt the encrypted digital signature based on a preset private key to acquire a first hash value, in response to the sending time of the key acquisition request being in the validity period; perform a hash calculation based on the encrypted identifier, to acquire a second hash value; match the first hash value with the second hash value, to acquire a matching result; and determine that the key acquisition request passes the security verification, in response to the matching result meeting a first condition.

In an implementation, the processing module may be specifically configured to: generate the first key; create a container instance; modify the login key of the first device to the first key, based on the container instance; and destroy the container instance.

In an optional implementation, the processing module may be specifically configured to: acquire a random number seed and a preset second key; encrypt the second key based on the random number seed, to acquire an encrypted result; and acquire a message digest of the encrypted result, as the first key.

In an implementation, the first sending module may be specifically configured to: encrypt the first key based on a Chinese national cryptographic algorithm; and send the encrypted first key to the terminal device, based on a guaranteed delivery message.

In an embodiment, the apparatus may further include a third acquisition module and a second processing module. The third acquisition module is configured to acquire a second login account sent by the first device. The second processing module is configured to determine whether the first key has been used for logging into the first device, according to the first login account and the second login account.

According to a fifth aspect, an embodiment of the application provides an apparatus for key management, the apparatus is applied to a terminal device, and the apparatus includes a first sending module and a first receiving module. The first sending module is configured to send a key acquisition request to a network side device, here the key acquisition request is used by the network side device to update a login key of a first device to a first key, after the key acquisition request passes security verification. The first receiving module is configured to receive the first key sent by the network side device.

In an implementation, the apparatus may further include a second sending module and a second receiving module. The second sending module is configured to send a key application information to the network side device, here the key application information is used by the network side device to send a key acquisition link to the terminal device, after the key application information passes risk control analysis. The second receiving module is configured to receive the key acquisition link sent by the network side device. The first sending module is specifically configured to send the key acquisition request to the network side device through the key acquisition link.

In an optional implementation, the key application information may include at least one of: a first identifier information of a first object, here the first object is an object submitting the key application information through the terminal device; an identification information of the first device; a first login account of the first device; a control start time of controlling the first device; or a control duration of controlling the first device.

In an optional implementation, the first sending module may be specifically configured to: perform a hash calculation based on the encrypted identifier, to obtain a first hash value; sign the first hash value based on a preset public key, to acquire a digital signature; and send the encrypted identifier and/or the digital signature as the key acquisition request to the network side device. In an implementation, the operation of receiving the first key sent by the network side device may include the following operations. The first key sent by the network side device through a guaranteed delivery message is acquired, here the first key is a key encrypted based on a Chinese national cryptographic algorithm.

In an implementation, the apparatus may further include a decryption module, a display module and a processing module. The decryption module is configured to decrypt the first key based on the Chinese national cryptographic algorithm. The display module is configured to provide a display interface, here the display interface is configured to display the decrypted first key. The processing module is configured to delete the decrypted first key, in response to the decrypted first key being known.

According to a sixth aspect, an embodiment of the application provides an apparatus for key management, the apparatus is applied to a first device, and the apparatus includes a processing module. The processing module is configured to: in response to performing a login operation on the first device, send a second login account corresponding to the login operation to the network side device, here the second login account is used by the network side device to update a login key of the first device to a first key, and determine whether the first key has been used for logging into the first device.

According to a seventh aspect, an embodiment of the application provides an electronic device, the electronic device includes at least one processor and a memory communicatively connected to the at least one processor. The memory has stored thereon instructions executable by the at least one processor, and the instructions are executed by the at least one processor to enable the at least one processor to perform the method for key management as described in the first aspect.

According to an eighth aspect, an embodiment of the application provides an electronic device, the electronic device includes at least one processor and a memory communicatively connected to the at least one processor. The memory has stored thereon instructions executable by the at least one processor, and the instructions are executed by the at least one processor to enable the at least one processor to perform the method for key management as described in the second aspect.

According to a ninth aspect, an embodiment of the application provides an electronic device, the electronic device includes at least one processor and a memory communicatively connected to the at least one processor. The memory has stored thereon instructions executable by the at least one processor, and the instructions are executed by the at least one processor to enable the at least one processor to perform the method for key management as described in the third aspect.

According to a tenth aspect, the application provides a system for key management, the system includes the apparatus for key management as described in the fourth aspect, the apparatus for key management as described in the fifth aspect and the apparatus for key management as described in the sixth aspect, or the system includes the electronic device as described in the seventh aspect, the electronic device as described in the eighth aspect and the electronic device as described in the ninth aspect.

According to an eleventh aspect, an embodiment of the application provides a computer-readable storage medium, the computer-readable storage medium has stored thereon instructions, and the method as described in the first aspect is implemented when the instructions are executed.

According to a twelfth aspect, an embodiment of the application provides a computer-readable storage medium, the computer-readable storage medium has stored thereon instructions, and the method as described in the second aspect is implemented when the instructions are executed.

According to a thirteenth aspect, an embodiment of the application provides a computer-readable storage medium, the computer-readable storage medium has stored thereon instructions, and the method as described in the third aspect is implemented when the instructions are executed.

According to a fourteenth aspect, an embodiment of the application provides a computer program product, the computer program product includes a computer program, and operations of the method for key management as described in the first aspect are implemented when the computer program is executed by a processor.

According to a fifteenth aspect, an embodiment of the application provides a computer program product, the computer program product includes a computer program, and operations of the method for key management as described in the second aspect are implemented when the computer program is executed by a processor.

According to a sixteenth aspect, an embodiment of the application provides a computer program product, the computer program product includes a computer program, and operations of the method for key management as described in the third aspect are implemented when the computer program is executed by a processor.

Technical solutions provided in embodiments of the application may include advantageous effects as follows. The network side device may update the login key of the first device in response to receiving the key acquisition request sent by the terminal device, and send the updated login key to the terminal device. The terminal device may also update the login key of the first device again, after determining, according to the information sent by the first device, that the updated login key has been used for logging into the first device. One-time validity of a single key is achieved, and key leakage is effectively prevented, to improve security of key management.

The above descriptions are only overviews of the technical solutions of the application. In order to understand the technical means of the application more clearly such that the application may be implemented according to contents of the description, and in order to make the above and other purposes, characteristics and advantages of the application more apparent and easy to understand, specific implementations of the application will be specially listed below.

### BRIEF DESCRIPTION OF THE DRAWINGS

Here, the drawings are incorporated into and constitute a part of the description, show embodiments consistent with the application, and are intended to explain the principle of the application together with the description.

In order to explain the technical solutions of the embodiments of the application more clearly, the drawings required to be used in the embodiments of the application will be briefly introduced below. Other drawings may also be obtained by those of ordinary skill in the art according to these drawings, without paying any creative work.
FIG. 1 is a flowchart of a method for key management according to an embodiment of the application.
FIG. 2 is a flowchart of another method for key management according to an embodiment of the application.
FIG. 3 is a flowchart of yet another method for key management according to an embodiment of the application.
FIG. 4 is a flowchart of yet another method for key management according to an embodiment of the application.
FIG. 5 is a schematic diagram of a key updating process according to an embodiment of the application.
FIG. 6 is a flowchart of yet another method for key management according to an embodiment of the application.
FIG. 7 is a schematic diagram of a solution of risk control analysis according to an embodiment of the application.
FIG. 8 is a flowchart of yet another method for key management according to an embodiment of the application.
FIG. 9 is a flowchart of yet another method for key management according to an embodiment of the application.
FIG. 10 is a flowchart of yet another method for key management according to an embodiment of the application.
FIG. 11 is a flowchart of yet another method for key management according to an embodiment of the application.
FIG. 12 is an interactive flowchart of a solution of key management according to an embodiment of the application.
FIG. 13 is a schematic diagram of an apparatus for key management according to an embodiment of the application.
FIG. 14 is a schematic diagram of another apparatus for key management according to an embodiment of the application.
FIG. 15 is a schematic diagram of yet another apparatus for key management according to an embodiment of the application.
FIG. 16 is a schematic diagram of yet another apparatus for key management according to an embodiment of the application.
FIG. 17 is a schematic diagram of yet another apparatus for key management according to an embodiment of the application.
FIG. 18 is a schematic diagram of yet another apparatus for key management according to an embodiment of the application.
FIG. 19 is a schematic diagram of yet another apparatus for key management according to an embodiment of the application.
FIG. 20 is a schematic block diagram of an exemplary electronic device that may be configured to implement the embodiments of the application.

### DETAILED DESCRIPTION

Exemplary embodiments of the application will be described below with reference to the drawings, in which various details of the embodiments of the application are included to facilitate understanding the application, therefore it should be considered that the drawings are exemplary only. Therefore, it should be appreciated by those of ordinary skill in the art that various changes and modifications may be made to the embodiments described here without departing from the scope and spirit of the application. Similarly, for the sake of clarity and conciseness, descriptions of well-known functions and structures will be omitted in the following descriptions.

In the descriptions of the application, unless otherwise specified, "/" means "or", for example, A/B may mean A or B; in the application, "and/or" is only a description of an association relationship of associated objects, and indicates that there may be three relationships. For example, A and/or B may indicate three situations: A exists alone, both A and B exist, and B exists alone. Various numbers such as first, second or the like mentioned in the application are only a distinction made for the convenience of descriptions, and are not intended to limit the scope of the embodiments of the application, nor do they indicate an order of precedence.

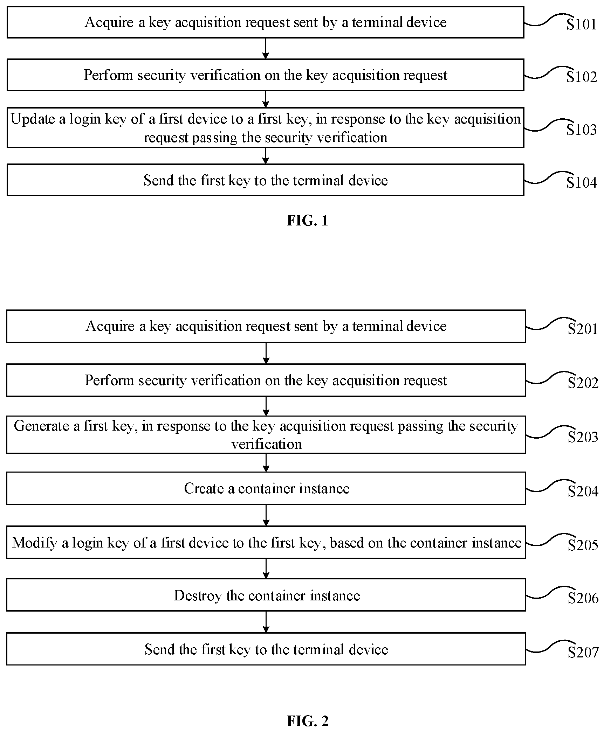

With reference to FIG. 1, a flowchart of a method for key management according to an embodiment of the application is shown. The method may be applied to a network side device. As shown in FIG. 1, the method may include, but is not limited to the following operations S101 to S104.

In operation S101, a key acquisition request sent by a terminal device is acquired.

For example, the key acquisition request sent by the terminal device through a preset request sending channel (such as a 5th Generation Mobile Communication Technology (5G) message or an application (App)) is acquired. The key acquisition request is configured to request acquiring a key from the network side device.

In operation S102, security verification is performed on the key acquisition request.

For example, the key acquisition request is identified through a preset security gateway, to screen and remove abnormal access data, verify identity of the terminal device sending the key acquisition request, and confirm security of the channel through which the key acquisition request is sent.

In some embodiments of the application, for a terminal device mounted with a Subscriber Identity Module (SIM) card, identity of the terminal device may be authenticated through SIM authentication.

In operation S103, a login key of a first device is updated to a first key, in response to the key acquisition request passing the security verification.

In the embodiment of the application, the first device is a device of which a login key is expected to be acquired by a user through the key acquisition request such that the user may log into it.

It should be noted that in the embodiment of the application, the first device may be a software device or a hardware device.

For example, in response to the key acquisition request sent by the terminal device passing the security verification, the login key of the first device into which the user needs to log by using a key is changed to the first key that is generated randomly.

In some embodiments of the application, the first key may have a corresponding effective time, that is, the login key of the first device is updated to the first key only in the effective time period.

In operation S104, the first key is sent to the terminal device.

For example, the first key is encrypted and sent to the terminal device through a 5G message.

With implementation of the embodiment of the application, the security verification may be performed on the key acquisition request of the terminal device, the login key of the first device is updated to the first key after the key acquisition request passes the security verification, and the first key is sent to the terminal device, such that the user may acquire the first key through the terminal device and log into the first device by using the first key. It is possible to achieve that the same device is controlled by different users using different keys respectively, thereby achieving key authorization management with a high security.

In an optional implementation, the login key of the first device may be updated to the first key by using a container technology, to avoid leakage of the first key. As an example, with reference to FIG. 2, a flowchart of another method for key management according to an embodiment of the application is shown. The method may be applied to a network side device. As shown in FIG. 2, the method may include, but is not limited to the following operations S201 to S207.

In operation S201, a key acquisition request sent by a terminal device is acquired.

In the embodiment of the application, the operation S201 may be implemented by any one of implementations in various embodiments of the application respectively, which is not limited in the embodiment of the application and will not be elaborated.

In operation S202, security verification is performed on the key acquisition request.

In the embodiment of the application, the operation S202 may be implemented by any one of implementations in various embodiments of the application respectively, which is not limited in the embodiment of the application and will not be elaborated.

In operation S203, a first key is generated, in response to the key acquisition request passing the security verification.

For example, a key is randomly generated as the first key, in response to the key acquisition request passing the security verification.

In an optional implementation, the above operation of generating the first key may include the following operations. A random number seed and a preset second key are acquired. The second key is encrypted based on the random number seed, to acquire an encrypted result. A message digest of the encrypted result is acquired as the first key.

For example, a time value of a current time is acquired as the random number seed, the preset second key is encrypted to obtain an encrypted result, the message digest of the encrypted result is extracted by using a Secure Hash Algorithm 1 (SHA-1) algorithm, and the message digest is used as the first key.

It may be understood that in some embodiments of the application, verification may also be performed on the first key after the first key is generated, and subsequent operations are performed in response to the first key passing the verification; or, a new first key is regenerated in response to the first key failing to pass the verification.

For example, verification is performed on the generated first key, to check whether complexity of the first key meets a preset requirement and check whether the first key meets a key rule. For example, characters in the first key should contain at least two of an uppercase letter, a lowercase letter, a number and a special character, and passcodes that cannot be used by an operating system (OS) normally, such as R$xxxxx which causes passcode contents after the symbol "$" to be truncated, R! 1234 which causes contents after the symbol "!" to become random values, or the like should be prevented from presenting in the first key.

In operation S204, a container instance is created.

In operation S205, a login key of a first device is modified to the first key, based on the container instance.

For example, the first key is sent to the container instance, such that the container instance modifies the login key of the first device to the first key.

In operation S206, the container instance is destroyed.

For example, a method of destroying the instance is called, the instance in the container is destroyed, and system resources and contents corresponding to the instance are released.

In operation S207, the first key is sent to the terminal device.

In the embodiment of the application, the operation S207 may be implemented by any one of implementations in various embodiments of the application respectively, which is not limited in the embodiment of the application and will not be elaborated.

With implementation of the embodiment of the application, the security verification may be performed on the key acquisition request of the terminal device, the login key of the first device is updated to the first key based on the container instance after the key acquisition request passes the security verification, and the container instance is destroyed after update is completed, to prevent leakage of the first key from the network side device, thereby achieving key authorization management with a high security.

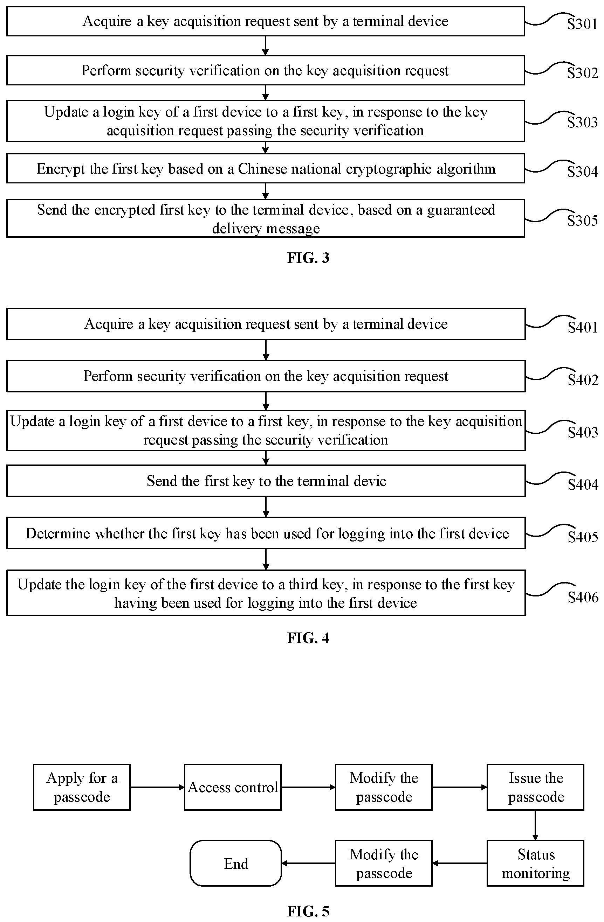

In an optional implementation, the first key may be sent to the terminal device through a guaranteed delivery message platform. As an example, with reference to FIG. 3, a flowchart of yet another method for key management according to an embodiment of the application is shown. The method may be applied to a network side device. As shown in FIG. 3, the method may include, but is not limited to the following operations S301 to S305.

In operation S301, a key acquisition request sent by a terminal device is acquired.

In the embodiment of the application, the operation S301 may be implemented by any one of implementations in various embodiments of the application respectively, which is not limited in the embodiment of the application and will not be elaborated.

In operation S302, security verification is performed on the key acquisition request.

In the embodiment of the application, the operation S302 may be implemented by any one of implementations in various embodiments of the application respectively, which is not limited in the embodiment of the application and will not be elaborated.

In operation S303, a login key of a first device is updated to a first key, in response to the key acquisition request passing the security verification.

In the embodiment of the application, the operation S303 may be implemented by any one of implementations in various embodiments of the application respectively, which is not limited in the embodiment of the application and will not be elaborated.

In operation S304, the first key is encrypted based on a Chinese national cryptographic algorithm.

In operation S305, the encrypted first key is sent to the terminal device, based on a guaranteed delivery message.

For example, a guaranteed delivery notification service based on a 5G super SIM card will send the first key encrypted by using the Chinese national cryptographic algorithm to the terminal device.

With implementation of the embodiment of the application, the security verification may be performed on the key acquisition request of the terminal device, the login key of the first device is updated to the first key after the key acquisition request passes the security verification, and the first key is sent to the terminal device through the guaranteed delivery message platform, such that the user may acquire the first key through the terminal device and log into the first device by using the first key. It is possible to achieve that the same device is controlled by multiple users using different keys, thereby achieving key authorization management with a high security.

In an implementation, after determining that the first device is logged in by using the first key, the login key of the first device may be updated again. As an example, with reference to FIG. 4, a flowchart of yet another method for key management according to an embodiment of the application is shown. The method may be applied to a network side device. As shown in FIG. 4, the method may include, but is not limited to the following operations S401 to S406.

In operation S401, a key acquisition request sent by a terminal device is acquired.

In the embodiment of the application, the operation S401 may be implemented by any one of implementations in various embodiments of the application respectively, which is not limited in the embodiment of the application and will not be elaborated.

In operation S402, security verification is performed on the key acquisition request.

In the embodiment of the application, the operation S402 may be implemented by any one of implementations in various embodiments of the application respectively, which is not limited in the embodiment of the application and will not be elaborated.

In operation S403, a login key of a first device is updated to a first key, in response to the key acquisition request passing the security verification.

In the embodiment of the application, the operation S403 may be implemented by any one of implementations in various embodiments of the application respectively, which is not limited in the embodiment of the application and will not be elaborated.

In operation S404, the first key is sent to the terminal device.

In the embodiment of the application, the operation S404 may be implemented by any one of implementations in various embodiments of the application respectively, which is not limited in the embodiment of the application and will not be elaborated.

In operation S405, whether the first key has been used for logging into the first device, is determined.

For example, whether the user has logged into the first device by using the first key, is determined.

In operation S406, the login key of the first device is updated to a third key, in response to the first key having been used for logging into the first device.

For example, the login key of the first device is updated to the third key, in response to the user having logged into the first device by using the first key.

It should be noted that in the embodiment of the application, a specific operation of updating the login key of the first device to the third key may be the same as the operation of updating the login key of the first device to the first key in any one of the above embodiments, which is not limited in the embodiment of the application and will not be elaborated.

It should be noted that in the embodiment of the application, when the login key of the first device is updated to the third key, if the user who logs into the first device by using the first key has not logged out, the user will not exit from the login status due to update of the login password.

With implementation of the embodiment of the application, the network side device may update the login key of the first device again after determining that the first device is logged in by using the first key, thereby ensuring one-time validity of the authorized key and improving security of key authorization.

As an example, with reference to FIG. 5, a schematic diagram of a key updating process according to an embodiment of the application is shown. As shown in FIG. 5, security verification may be performed on a key application information after receiving the key application information, and the login key of the first device may be modified to the first key after the key application information passes the security verification. The first key is sent to the terminal device. Furthermore, a login status of the first device is monitored, and the login key of the first device is changed after monitoring that the user logs into the first device by using the first key.

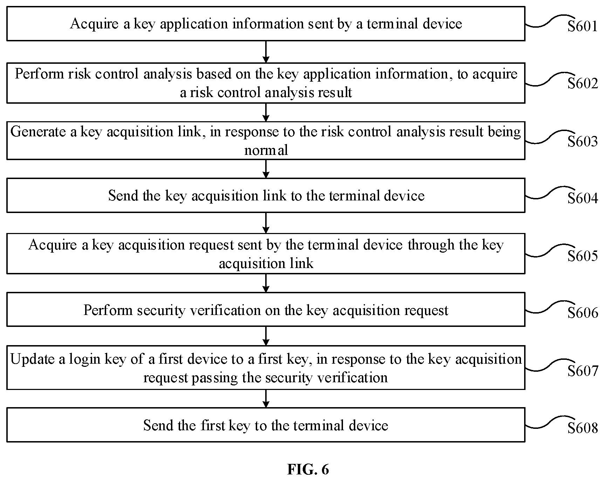

In an implementation, the network side device may perform relevant analysis based on relevant information sent by the terminal device, to determine whether the network side device processes the key acquisition request of the terminal device. As an example, with reference to FIG. 6, a flowchart of yet another method for key management according to an embodiment of the application is shown. The method may be applied to a network side device. As shown in FIG. 6, the method may include, but is not limited to the following operations S601 to S608.

In operation S601, a key application information sent by the terminal device is acquired.

In an optional implementation, the key application information includes at least one of: a first identifier information of a first object, here the first object is an object submitting the key application information through the terminal device; an identification information of the first device; a first login account of the first device; a control start time of controlling the first device; or a control duration of controlling the first device.

In the embodiment of the application, the first identifier information of the first object may include, but is not limited to Identity Document (ID), name or the like of the first object.

In some embodiments of the application, an identifier information of the terminal device may be used as the identifier information of the first object. The identifier information of the terminal device may include, but is not limited to International Mobile Device Identity (IMEI) and Integrate Circuit Card Identity (ICCID) of the SIM card in the terminal device.

In the embodiment of the application, the identification information of the first device may include, but is not limited to an Internet Protocol (IP) address corresponding to the first device, a device identity of the first device (such as IMEI), etc.

In operation S602, risk control analysis is performed based on the key application information, to acquire a risk control analysis result.

Specifically, the risk control analysis is performed based on the key application information, to identify whether there is a risk in the key application information, and obtain the risk control analysis result.

In an optional implementation, the above operation of performing the risk control analysis based on the key application information may include the following operations A1 to A4.

In operation A1, a controllable time period and a first device information of the first device are determined according to the identification information.

Specifically, according to the identification information of the first device, the first device information of the first device (such as a performance indicator of the first device, a load level of the first device) is determined, and the controllable time period in which the first device may be used currently is determined.

In operation A2, whether the first object has authority to apply for a key, is determined according to the first identifier information and the control duration.

For example, a controllable duration of the first object is determined according to the first identifier information, to determine whether the controllable duration of the first object is greater than the control duration, so as to determine whether the first object has authority to apply for a key.

In operation A3, an applicable operation duration of the first object and a second device information of an applicable operation device for the first object are determined according to the first identifier information, in response to the first object having authority to apply for a key.

For example, different object levels may be preset, a different device may be controlled by each of the object levels, and a duration in which the device may be controlled by each of the object levels is different. A target object level corresponding to the first object is determined according to the first identifier information, such that the applicable operation duration of the first object and the second device information of the applicable operation device for the first object are determined according to a device which may be controlled by the target object level and a duration in which the device may be controlled by the target object level.

Optionally, the operation of determining the applicable operation duration of the first object and the second device information of the applicable operation device for the first object, according to the first identifier information may include the following operations. An association information of the first object is determined according to the first identifier information. A weight value is determined based on the association information. A target object level of the first object is determined from multiple preset object levels according to the weight value. The applicable operation duration and the second device information are determined according to the target object level.

In the embodiment of the application, the association information includes at least one of: years of work experience of the first object; an associated project information of the first object; a project reuse information of the first object; an own attribute information of the first object; or an abnormal operation information of the first object.

In the embodiment of the application, the associated project information of the first object may include, but is not limited to project attributes associated with the first object, such as an operation support project, a research and development (R&D) project, etc.

In the embodiment of the application, the own attribute information of the first object may include, but is not limited to a job title information of the first object and a job level information of the first object.

In an embodiment of the application, the abnormal operation information of the first object may be a number of non-compliant operations of the first object in a preset time period (such as one year).

In the embodiment of the application, each of the object levels corresponds to a different applicable operation duration and a different applicable operation device respectively.

For example, association information of the first object is determined from association information of multiple objects acquired in advance according to the first identifier information, a weight value is assigned to each association information based on a preset rule, and a weighted sum of the weight value corresponding to each association information is calculated to obtain a weight value corresponding to the first object. Multiple object levels are preset, and each of the object levels corresponds to a different weight value range respectively, such that a weight value range to which the weight value corresponding to the first object belongs may be determined, then the target object level corresponding to the first object is determined, and an applicable operation duration and an applicable operation device corresponding to the target object level are determined as the applicable operation duration and the second device information of the first object.

In operation A4, the risk control analysis is performed according to the control start time, the controllable time period, the applicable operation duration, the first device information and the second device information.

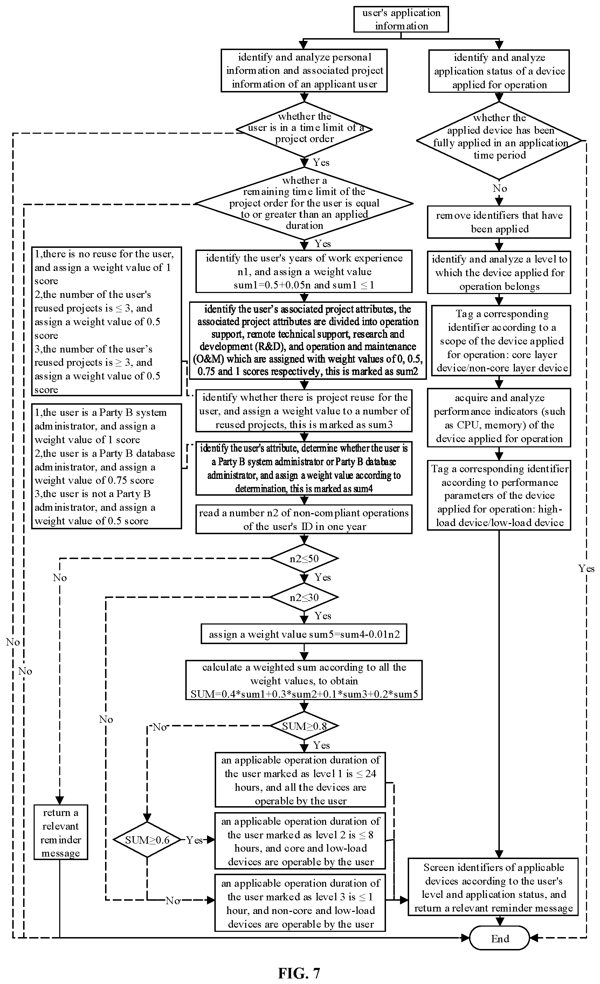

As an example, with reference to FIG. 7, a schematic diagram of a solution of risk control analysis according to an embodiment of the application is shown. As shown in FIG. 7, a key application information may be acquired, and multiple pieces of association information of the user (i.e., the first object) may be acquired according to the user's identifier information in the key information, to assign a weight value to each piece of association information according to its importance level, and obtain a final weight value through a weighted sum calculation algorithm, so as to obtain a user's level of the applicant user according to the final weight value. For example, the user's level may be divided into level 1 (for which an applicable operation duration is ≤ 24 hours, and all the devices are operable), level 2 (for which an applicable operation duration is ≤ 8 hours, and core and low-load devices are operable), and level 3 (for which an applicable operation duration is ≤ 1 hour, and non-core and low-load devices are operable). Furthermore, identification information of a device applied for operation is identified and analyzed, which includes determining whether the applied device has been applied in an application time period, determining whether the device applied for operation is a core device, and determining a load level of the applied device. Finally, the device applied for operation is analyzed and screened by considering in combination with the user's level, and finally relevant information is returned to the user (for example, the user is level X, the applicable operation duration is ≤ x hours, and the identification information of the device that may be applied this time is XXX).

In operation S603, a key acquisition link is generated, in response to the risk control analysis result being normal.

For example, the key acquisition link is generated, in response to the risk control analysis result indicating that the first device may be controlled by the first object in a corresponding time period.

In some embodiments of the application, the risk control analysis result may also be sent to the terminal device, such that the user may know processing status of key application through the terminal device in time.

In some embodiments of the application, manual approval may be performed based on the risk control analysis result before generating the key acquisition link, and the key acquisition link is generated in response to passing the manual approval.

Optionally, the above operation of generating the key acquisition link may include the following operations. A first link is generated. An encrypted identifier is generated based on the key application information. The encrypted identifier is attached to the first link, to obtain the key acquisition link. The key acquisition link is sent to the terminal device.

In the embodiment of the application, the first link corresponds to a key acquisition entry.

Specifically, a first connection for acquiring a key is generated, a private field is created to store the key application information, values of various fields in the key application information are combined together to form an encrypted identifier, the encrypted identifier is attached to the first link to obtain the key acquisition link, and the key acquisition link is sent to the terminal device.

In operation S604, the key acquisition link is sent to the terminal device.

For example, the key acquisition link is sent to the terminal device through a 5G message.

In operation S605, the key acquisition request sent by the terminal device through the key acquisition link is acquired.

For example, the key acquisition request sent by the user clicking the key acquisition link through the terminal device is acquired.

In operation S606, security verification is performed on the key acquisition request.

In the embodiment of the application, the operation S606 may be implemented by any one of implementations in various embodiments of the application respectively, which is not limited in the embodiment of the application and will not be elaborated.

Optionally, the key acquisition request includes at least one of a digital signature encrypted by using a preset public key, the encrypted identifier, or a second identifier information of the terminal device, and the operation of performing the security verification on the key acquisition request includes the following operations B1 to B6.

In operation B1, identity authentication is performed based on the second identifier information of the terminal device.

In the embodiment of the application, the second identifier information may include, but is not limited to IMEI of the terminal device and ICCID of the SIM card in the terminal device.

In operation B2, whether a sending time of the key acquisition request is in a preset validity period, is determined in response to the second identifier information passing the identity authentication.

Specifically, whether a time when the first object sends the key acquisition request by clicking the key acquisition link is in a preset link validity time period, is determined in response to the second identifier information passing the identity authentication.

In operation B3, the encrypted digital signature is decrypted based on a preset private key to acquire a first hash value, in response to the sending time of the key acquisition request being in the validity period.

Specifically, the encrypted digital signature is decrypted based on the preset private key to acquire the first hash value, in response to the time when the first object sends the key acquisition request by clicking the key acquisition link being in the preset link validity time period.

In some other embodiments of the application, a corresponding prompt message is sent to the terminal device, in response to the time when the first object sends the key acquisition request by clicking the key acquisition link being not in the preset link validity time period.

In operation B4, a hash calculation is performed based on the encrypted identifier, to acquire a second hash value.

In operation B5, the first hash value is matched with the second hash value, to acquire a matching result.

In operation B6, it is determined that the key acquisition request passes the security verification, in response to the matching result meeting a first condition.

For example, it is determined that the key acquisition request passes the security verification, in response to the matching result indicating that the first hash value is the same as the second hash value.

In operation S607, a login key of a first device is updated to a first key, in response to the key acquisition request passing the security verification.

In the embodiment of the application, the operation S607 may be implemented by any one of implementations in various embodiments of the application respectively, which is not limited in the embodiment of the application and will not be elaborated.

In operation S608, the first key is sent to the terminal device.

In the embodiment of the application, the operation S608 may be implemented by any one of implementations in various embodiments of the application respectively, which is not limited in the embodiment of the application and will not be elaborated.

With implementation of the embodiment of the application, the network side device may receive the key application information sent by the terminal device, perform risk analysis based on the key application information, and send the key acquisition link to the terminal device after passing the risk analysis. It is possible to perform security verification on the identity and key request of the terminal device, thereby achieving key authorization management with a high security.

In the above embodiments provided in the application, the method for key management according to the embodiments of the application is introduced from the perspective of the network side device. Next, the method for key management according to the embodiments of the application will be further introduced from the perspective of the terminal device.

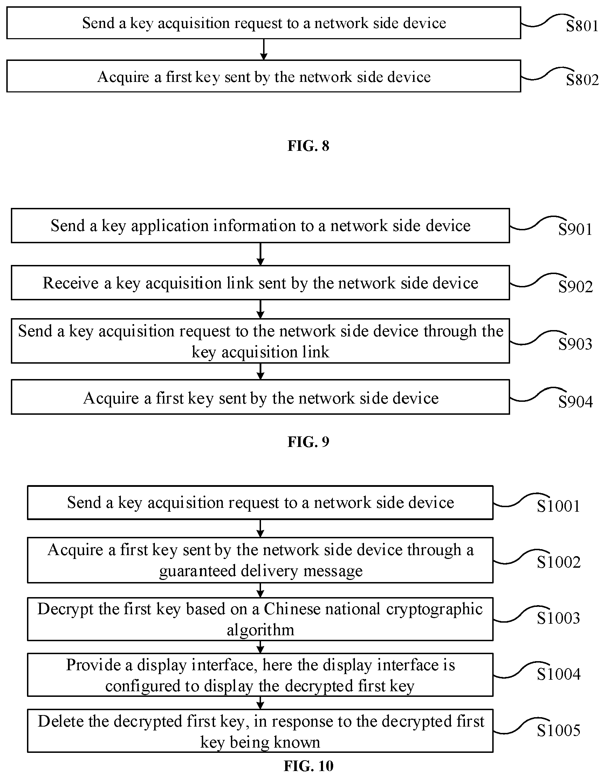

With reference to FIG. 8, a flowchart of yet another method for key management according to an embodiment of the application is shown. The method may be applied to a terminal device. As shown in FIG. 8, the method may include, but is not limited to the following operations S801 and S802.

In operation S801, a key acquisition request is sent to a network side device.

In the embodiment of the application, the key acquisition request is used by the network side device to update a login key of a first device to a first key, after the key acquisition request passes security verification.

For example, the key acquisition request is sent to the network side device, and the key acquisition request is configured to request acquiring a key for logging into the first device from the network side device.

In operation S802, a first key sent by the network side device is acquired.

For example, the first key sent by the network side device and used for logging into the first device is acquired.

With implementation of the embodiment of the application, the terminal device may send the key acquisition request to the network side device, to receive the first key sent by the network side device based on the key acquisition request, thereby achieving key authorization management with a high security.

In an implementation, the terminal device may further send relevant information for applying for a key to the network side device. The relevant information is used by the network side device to analyze relevant status of the terminal device, and determine whether information for acquiring the key is sent to the terminal device based on the relevant information. As an example, with reference to FIG. 9, a flowchart of yet another method for key management according to an embodiment of the application is shown. The method may be applied to a terminal device. As shown in FIG. 9, the method may include, but is not limited to the following operations S901 to S904.

In operation S901, a key application information is sent to a network side device.

The key application information is used by the network side device to send a key acquisition link to the terminal device, after the key application information passes risk control analysis.

The key application information includes at least one of: a first identifier information of a first object; an identification information of the first device; a first login account of the first device; a control start time of controlling the first device; or a control duration of controlling the first device.

The first object is an object submitting the key application information through the terminal device.

In operation S902, a key acquisition link sent by the network side device is received.

For example, the key acquisition link sent by the network side device is received, and the key acquisition link points to a key acquisition entry.

In operation S903, a key acquisition request is sent to the network side device through the key acquisition link.

For example, when the user needs to log into the first device, the user clicks the key application link to send the key acquisition request to the network side device.

In the embodiment of the application, the key acquisition link is attached with an encrypted identifier, and the operation of sending the key acquisition request to the network side device includes the following operations. A hash calculation is performed based on the encrypted identifier, to obtain a first hash value. The first hash value is signed based on a preset public key, to acquire a digital signature. The encrypted identifier and/or the digital signature as the key acquisition request is sent to the network side device.

For example, the key acquisition link is attached with an encrypted identifier; a hash calculation is performed on the encrypted identifier to obtain a hash value, in response to the user clicking the key acquisition link; and the hash value is signed by using a preset public key, to generate a digital signature, thereby sending the digital signature and the encrypted identifier to the network side device.

In operation S904, a first key sent by the network side device is acquired.

For example, a 5G message sent by the network side device is received, and the first key is carried in the 5G message.

With implementation of the embodiment of the application, the terminal device may send the key application information to the network side device, receive the key acquisition link sent by the network side device after performing risk control analysis based on the key application information, and send the key acquisition request to the network side device with the key acquisition link. It is possible to improve security of key management.

In an implementation, the first key sent by the network side device based on a guaranteed delivery message platform may be acquired and displayed. As an example, with reference to FIG. 10, a flowchart of yet another method for key management according to an embodiment of the application is shown. The method may be applied to a terminal device. As shown in FIG. 10, the method may include, but is not limited to the following operations S1001 to S1005.

In operation S1001, a key acquisition request is sent to a network side device.

In the embodiment of the application, the operation S1001 may be implemented by any one of implementations in various embodiments of the application respectively, which is not limited in the embodiment of the application and will not be elaborated.

In operation S1002, a first key sent by the network side device through a guaranteed delivery message is acquired.

In the embodiment of the application, the operation S1002 may be implemented by any one of implementations in various embodiments of the application respectively, which is not limited in the embodiment of the application and will not be elaborated.

The first key is a key encrypted based on a Chinese national cryptographic algorithm.

In operation S1003, the first key is decrypted based on a Chinese national cryptographic algorithm.

Specifically, the encrypted first key is decrypted based on the Chinese national cryptographic algorithm, to acquire the decrypted first key.

In some embodiments of the application, the first key may be decrypted by an encryption and decryption function module of the super SIM card in the terminal device, based on the Chinese national cryptographic algorithm.

In operation S1004, a display interface is provided, here the display interface is configured to display the decrypted first key.

For example, the decrypted first key is displayed through a display interface of the terminal device.

In operation S1005, the decrypted first key is deleted, in response to the decrypted first key being known.

For example, through a relevant function of the guaranteed delivery message, after determining that the user has read the first key, a pop-up window configured to display the first key is canceled, and the first key is deleted from the terminal device.

With implementation of the embodiment of the application, the terminal device may receive the first key sent by the network side device based on the guaranteed delivery message, and the first key is deleted from the terminal device after the user knows the first key through the terminal device, to prevent leakage of the first key and improve security of key management. In this way, the network side device may be for example a server, replaces centralized password management modes by way of changing the password to acquire a latest passcode of the terminal, thereby reducing complexity of a password management system; the passcode is automatically updated after the user logs in successfully, to ensure that each passcode may be used only once; the container/instance is released immediately after the passcode is generated and issued, to achieve a purpose of immediate destruction thereof, thereby reducing consumption of memory resources of the network side device and saving resources of the network side device.

In the above embodiments provided in the application, the method for key management according to the embodiments of the application is introduced from the perspective of the network side device and the perspective of the terminal device respectively. Next, the method for key management according to the embodiments of the application will be further introduced from the perspective of the first device.

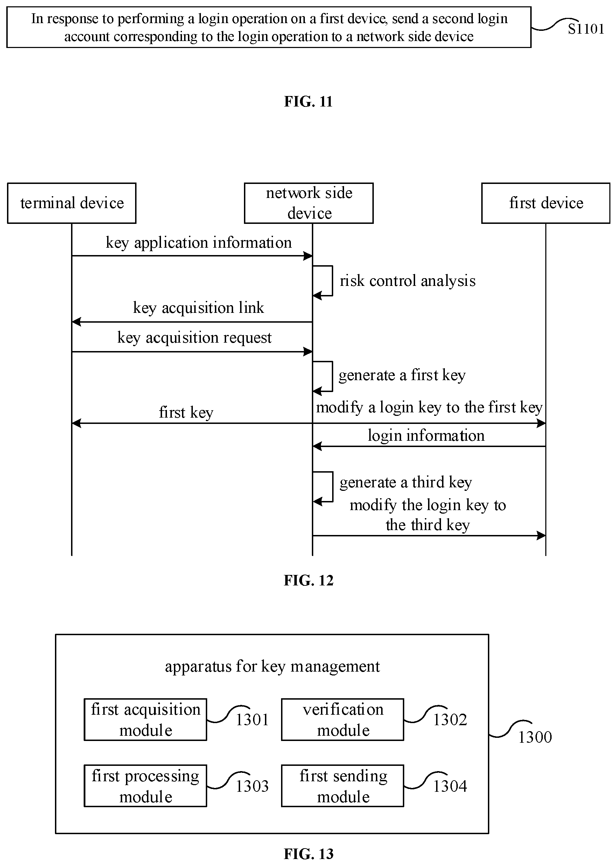

With reference to FIG. 11, a flowchart of yet another method for key management according to an embodiment of the application is shown. The method may be applied to a first device. As shown in FIG. 11, the method may include, but is not limited to the following operation S1101.

In operation S1101, in response to performing a login operation on a first device, a second login account corresponding to the login operation is sent to a network side device.

The second login account is used by the network side device to update a login key of the first device to a first key, and determine whether the first key has been used for logging into the first device.

Specifically, an account used by the user to log into the first device is sent to the network side device, in response to the user logging into the first device.

As an example, the first device may monitor a WTMP log in real time through a pre-installed Agent, and acquire, according to a configured parsing rule, an original log generated when a service is run, to sense variations of log contents, thereby reading a locally logged-in account and sending the locally logged-in account to the network side device.

With implementation of the embodiment of the application, the first device may send the second login account corresponding to the user's login operation to the network side device in response to the login operation, such that whether the login account of the first device should be updated, is determined by the network side device based on determining whether the first object logs into the first device, thereby improving security of the first device.

With reference to FIG. 12, an interactive flowchart of a solution of key management according to an embodiment of the application is shown. As shown in FIG. 12, in this solution, the network side device may perform risk control analysis based on a key application information sent by the user through the terminal device, and provide a key acquisition link to the terminal device after the key application information passes the risk control analysis. The user may send a key acquisition request to the network side device through the key acquisition link in a preset authorization period. After receiving the key acquisition request, the network side device performs verification on the key acquisition request; generates a temporary container after the key acquisition request passes the verification, to modify a key of a specified device to a first key that is generated randomly; releases the container after modification is completed, to ensure that the key information is destroyed; and sends the first key to the terminal device, to ensure that the key information is destroyed. After detecting that the user logs into the system by using the first key, the network side device will re-initiate a password modification action, to modify the login key of the above specified device to a third key again, thereby ensuring that each key may be used only once.

With reference to FIG. 13, a schematic diagram of an apparatus for key management according to an embodiment of the application is shown. The apparatus is applied to a network side device. As shown in FIG. 13, the apparatus 1300 includes a first acquisition module 1301, a verification module 1302, a first processing module 1303 and a first sending module 1304. The first acquisition module 1301 is configured to acquire a key acquisition request sent by a terminal device. The verification module 1302 is configured to perform security verification on the key acquisition request. The first processing module 1303 is configured to update a login key of a first device to a first key, in response to the key acquisition request passing the security verification. The first sending module 1304 is configured to send the first key to the terminal device.

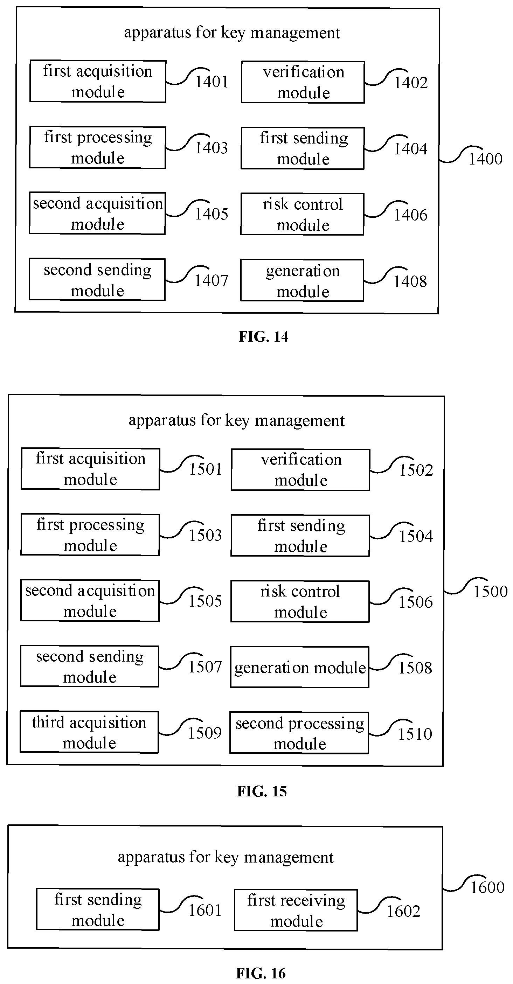

In an implementation, the above apparatus further includes a second acquisition module, a risk control module, a generation module and a second sending module. As an example, with reference to FIG. 14, a schematic diagram of another apparatus for key management according to an embodiment of the application is shown. As shown in FIG. 14, the apparatus 1400 further includes a second acquisition module 1405, a risk control module 1406, a second sending module 1407 and a generation module 1408. The second acquisition module 1405 is configured to acquire a key application information sent by the terminal device. The risk control module 1406 is configured to perform risk control analysis based on the key application information, to acquire a risk control analysis result. The second sending module 1407 is configured to send the risk control analysis result to the terminal device. The generation module 1408 is configured to generate a key acquisition link, in response to the risk control analysis result being normal. The second sending module 1407 is further configured to send the key acquisition link to the terminal device. The first acquisition module 1401 is specifically configured to acquire the key acquisition request sent by the terminal device through the key acquisition link. Here, modules 1401 to 1404 in FIG. 14 have the same structure and function as modules 1301 to 1304 in FIG. 13 respectively.

In an optional implementation, the key application information includes at least one of: a first identifier information of a first object, here the first object is an object submitting the key application information through the terminal device; an identification information of the first device; a first login account of the first device; a control start time of controlling the first device; or a control duration of controlling the first device.

Optionally, the risk control module 1406 is specifically configured to: determine a controllable time period and a first device information of the first device according to the identification information; determine whether the first object has authority to apply for a key, according to the first identifier information and the control duration; determine an applicable operation duration of the first object and a second device information of an applicable operation device for the first object according to the first identifier information, in response to the first object having authority to apply for a key; and perform the risk control analysis according to the control start time, the controllable time period, the applicable operation duration, the first device information and the second device information.

Optionally, the risk control module 1406 is specifically configured to: determine an association information of the first object according to the first identifier information; determine a weight value based on the association information; determine a target object level of the first object from multiple preset object levels according to the weight value, here each of the object levels corresponds to a different applicable operation duration and a different applicable operation device respectively; and determine the applicable operation duration and the second device information according to the target object level.

Optionally, the association information includes at least one of: years of work experience of the first object; an associated project information of the first object; a project reuse information of the first object; an own attribute information of the first object; or an abnormal operation information of the first object.

In an optional implementation, the generation module 1408 is specifically configured to: generate a first link, here the first link corresponds to a key acquisition entry; generate an encrypted identifier based on the key application information; attach the encrypted identifier to the first link, to obtain the key acquisition link; and send the key acquisition link to the terminal device.

Optionally, the key acquisition request includes at least one of a digital signature encrypted by using a preset public key, the encrypted identifier, or a second identifier information of the terminal device, and the verification module 1302 is specifically configured to: perform identity authentication based on the second identifier information of the terminal device; determine whether a sending time of the key acquisition request is in a preset validity period, in response to the second identifier information passing the identity authentication; decrypt the encrypted digital signature based on a preset private key to acquire a first hash value, in response to the sending time of the key acquisition request being in the validity period; perform a hash calculation based on the encrypted identifier, to acquire a second hash value; match the first hash value with the second hash value, to acquire a matching result; and determine that the key acquisition request passes the security verification, in response to the matching result meeting a first condition.

In an implementation, the first processing module 1303 is specifically configured to: generate the first key; create a container instance; modify the login key of the first device to the first key, based on the container instance; and destroy the container instance.

In an optional implementation, the first processing module 1303 is specifically configured to: acquire a random number seed and a preset second key; encrypt the second key based on the random number seed, to acquire an encrypted result; and acquire a message digest of the encrypted result, as the first key.

In an implementation, the first sending module 1304 is specifically configured to: encrypt the first key based on a Chinese national cryptographic algorithm; and send the encrypted first key to the terminal device, based on a guaranteed delivery message.

Optionally, the above apparatus further includes a third acquisition module and a second processing module. As an example, with reference to FIG. 15, a schematic diagram of yet another apparatus for key management according to an embodiment of the application is shown. As shown in FIG. 15, the apparatus 1500 further includes a third acquisition module 1509 and a second processing module 1510. The third acquisition module 1509 is configured to acquire a second login account sent by the first device. The second processing module 1510 is configured to determine whether the first key has been used for logging into the first device, according to the first login account and the second login account. Here, modules 1501 to 1508 in FIG. 15 have the same structure and function as modules 1401 to 1408 in FIG. 14 respectively.

With reference to FIG. 16, a schematic diagram of yet another apparatus for key management according to an embodiment of the application is shown. The apparatus 1600 is applied to a terminal device. As shown in FIG. 16, the apparatus 1600 includes a first sending module 1601 and a first receiving module 1602. The first sending module 1601 is configured to send a key acquisition request to a network side device, here the key acquisition request is used by the network side device to update a login key of a first device to a first key, after the key acquisition request passes security verification. The first receiving module 1602 is configured to receive the first key sent by the network side device.

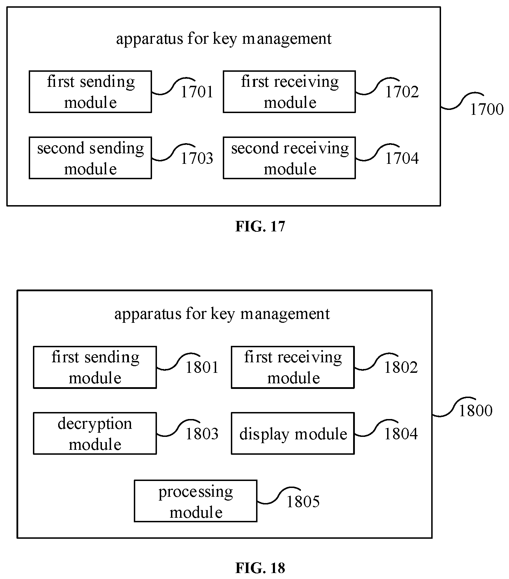

In an implementation, the above apparatus further includes a second sending module and a second receiving module. As an example, with reference to FIG. 17, a schematic diagram of yet another apparatus for key management according to an embodiment of the application is shown. The apparatus 1700 is applied to a terminal device. As shown in FIG. 17, the apparatus 1700 further includes a second sending module 1703 and a second receiving module 1704. The second sending module 1703 is configured to send a key application information to the network side device, here the key application information is used by the network side device to send a key acquisition link to the terminal device, after the key application information passes risk control analysis. The second receiving module 1704 is configured to receive the key acquisition link sent by the network side device. The first sending module 1701 is specifically configured to send the key acquisition request to the network side device through the key acquisition link. Here, modules 1701 and 1702 in FIG. 17 have the same structure and function as modules 1601 and 1602 in FIG. 16 respectively.

In an optional implementation, the key application information includes at least one of: a first identifier information of a first object, here the first object is an object submitting the key application information through the terminal device; an identification information of the first device; a first login account of the first device; a control start time of controlling the first device; or a control duration of controlling the first device.

In an optional implementation, the first sending module 1601 is specifically configured to: perform a hash calculation based on the encrypted identifier, to obtain a first hash value; sign the first hash value based on a preset public key, to acquire a digital signature; and send the encrypted identifier and/or the digital signature as the key acquisition request to the network side device.

In an implementation, the first receiving module 1602 is specifically configured to acquire the first key sent by the network side device through a guaranteed delivery message, here the first key is a key encrypted based on a Chinese national cryptographic algorithm.

In an implementation, the above apparatus further includes a decryption module, a display module and a processing module. As an example, with reference to FIG. 18, a schematic diagram of yet another apparatus for key management according to an embodiment of the application is shown. The apparatus 1800 is applied to a terminal device. As shown in FIG. 18, the apparatus 1800 further includes a decryption module 1803, a display module 1804 and a processing module 1805. The decryption module 1803 is configured to decrypt the first key based on the Chinese national cryptographic algorithm. The display module 1804 is configured to provide a display interface, here the display interface is configured to display the decrypted first key. The processing module 1805 is configured to delete the decrypted first key, in response to the decrypted first key being known. Here, modules 1801 and 1802 in FIG. 18 have the same structure and function as modules 1601 and 1602 in FIG. 16 respectively.

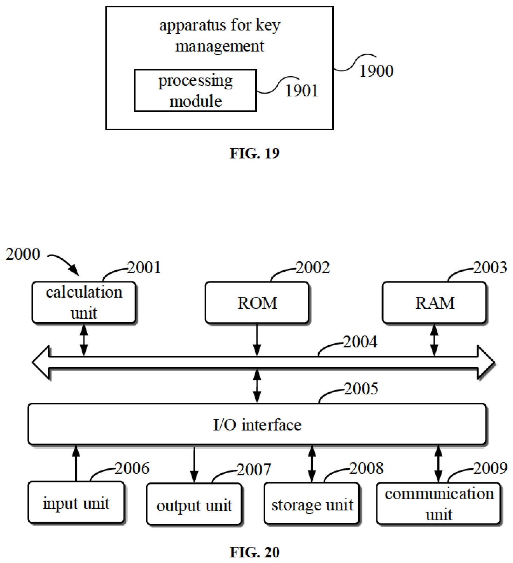

With reference to FIG. 19, a schematic diagram of yet another apparatus for key management according to an embodiment of the application is shown. The apparatus 1900 is applied to a first device. As shown in FIG. 19, the apparatus 1900 includes a processing module 1901. The processing module 1901 is configured to: in response to performing a login operation on the first device, send a second login account corresponding to the login operation to a network side device, here the second login account is used by the network side device to update a login key of the first device to a first key, and determine whether the first key has been used for logging into the first device.

For the apparatus in the above embodiments, specific modes in which each module performs its operations have been described in detail in the embodiments related to the methods and will not be elaborated here.

Based on the embodiments of the application, the application further provides an electronic device, the electronic device includes at least one processor and a memory communicatively connected to the at least one processor. The memory has stored thereon instructions executable by the at least one processor, and the instructions are executed by the at least one processor to enable the at least one processor to perform the method for key management as described in any one of the above embodiments.

Based on the embodiments of the application, the application further provides a computer-readable storage medium, in which computer instructions enable a computer to perform the method for key management as described in any one of the above embodiments and provided in the embodiments of the application.

With reference to FIG. 20, as shown in FIG. 20, a schematic block diagram of an exemplary electronic device that may be configured to implement the embodiments of the application. The electronic device is intended to represent various forms of digital computers, such as a laptop computer, a desktop computer, a dashboard, a Personal Digital Assistant (PDA), a server, a blade server, a mainframe computer, and other suitable computers. Components shown here, their connections, relationships and functions are examples only, and are not intended to limit implementations of the application described and/or claimed here.

As shown in FIG. 20, the device 2000 includes a calculation unit 2001 which may perform various appropriate actions and processes according to a computer program stored in a Read-Only Memory (ROM) 2002 or a computer program loaded from a storage unit 20020 into a Random Access Memory (RAM) 2003. Various programs and data required by operations of the device 2000 may also be stored in the RAM 2003. The calculation unit 2001, the ROM 2002 and the RAM 2003 are connected to each other through a bus 2004. An Input/Output (I/O) interface 2005 is also connected to the bus 2004.

Multiple components in the device 2000 are connected to the I/O interface 2005, which include: an input unit 2006, such as a keyboard, a mouse or the like; an output unit 2007, such as various types of displays, speakers or the like; a storage unit 20020, such as a magnetic disk, an optical disk or the like; and a communication unit 2009, such as a network card, a modem, a wireless communication transceiver, etc. The communication unit 2009 allows the device 2000 to exchange information/data with other devices through a computer network such as the Internet and/or various telecommunication networks.

The calculation unit 2001 may be various general-purpose and/or special-purpose processing components with processing and calculation capabilities. Some examples of the calculation unit 2001 include, but are not limited to a Central Processing Unit (CPU), a Graphics Processing Unit (GPU), various dedicated Artificial Intelligence (AI) computing chips, various calculation units executing machine learning model algorithms, a Digital Signal Processor (DSP), and any suitable processors, controllers, microcontrollers, etc. The calculation unit 2001 performs various methods and processes as described above, such as the method for key management. For example, in some embodiments, the method for key management may be implemented as a computer software program which is tangibly included in a machine-readable medium, such as the storage unit 20020. In some embodiments, a part or all of the computer program may be loaded into and/or installed on the device 2000 via the ROM 2002 and/or the communication unit 2009. One or more operations of the above method for key management may be performed when the computer program is loaded into the RAM 2003 and executed by the calculation unit 2001. Alternatively, in other embodiments, the calculation unit 2001 may be configured to perform the method for key management in any other appropriate modes (for example, by means of firmware).

Various implementations of systems and technologies as described above in the application may be implemented in a digital electronic circuit system, an integrated circuit system, a Field Programmable Gate Array (FPGA), an Application Specific Integrated Circuit (ASIC), an Application Specific Standard Part (ASSP), a System On Chip (SOC), a Complex Programmable Logic Device (CPLD), computer hardware, firmware and software, and/or combinations thereof. These various implementations may include: they are implemented in one or more computer programs, the one or more computer programs may be executed and/or interpreted on a programmable system including at least one programmable processor, and the programmable processor may be a special-purpose or general-purpose programmable processor which may receive data and instructions from a storage system, at least one input device and at least one output device, and transmit data and instructions to the storage system, the at least one input device and the at least one output device.

Program codes for implementing the method of the application may be written in any combination of one or more programming languages. These program codes may be provided to a processor or controller of a general-purpose computer, a special-purpose computer or another programmable data processing device, such that functions/operations specified in the flowchart and/or block diagram are implemented when the program codes are executed by the processor or controller. The program codes may be executed entirely on the machine, partially on the machine, partially on the machine and partially on a remote machine, or entirely on the remote machine or server when they are used as a stand-alone software package.

In the context of the application, the machine-readable medium may be a tangible medium which may include or store a program to be used by an instruction execution system, apparatus or device or used in combination with the instruction execution system, apparatus or device. The machine-readable medium may be a machine-readable signal medium or a machine-readable storage medium. The machine-readable medium may include, but is not limited to an electronic, magnetic, optical, electromagnetic, infrared or semiconductor system, apparatus or device, or any suitable combination of the above items. A more specific example of the machine-readable storage medium may include an electrical connection based on one or more lines, a portable computer disk, a hard disk, a RAM, a ROM, an Erasable Programmable Read-Only Memory (EPROM) or flash memory, an optical fiber, a portable Compact Disk Read-Only Memory (CD-ROM), an optical storage device, a magnetic storage device, or any suitable combination of the above items.

In order to provide interaction with the user, systems and technologies described here may be implemented on a computer, the computer is provided with: a display device (such as a Cathode Ray Tube (CRT) or Liquid Crystal Display (LCD) monitor) configured to display information to the user; and a keyboard and pointing device (such as a mouse or trackball) through which the user may provide inputs to the computer. Interaction with the user may also be provided by using other types of devices; for example, feedback provided to the user may be any form of sensory feedback (such as visual feedback, auditory feedback, or tactile feedback); and inputs from the user may be received in any form (including acoustic input, voice input, or tactile input).

The systems and technologies described here may be implemented in a computing system including backend components (for example, as a data server), or a computing system including middleware components (such as an application server), or a computing system including frontend components (such as a user computer provided with a Graphical User Interface (GUI) or a web browser, through which the user may interact with implementations of the systems and technologies described here), or a computing system including any combination of such backend components, middleware components or frontend components. Components of the system may be connected to each other by a digital data communication in any form or medium (such as a communication network). Examples of the communication network include a Local Area Network (LAN), a Wide Area Network (WAN), the Internet, and a blockchain network.

A computer system may include a client and a server. The client and the server are usually remote from each other and usually interact with each other through a communication network. A relationship between the client and the server is generated by computer programs executed on corresponding computers and having a client-server relationship with each other. The server may be a cloud server which is also known as a cloud computing server or a cloud host, it is a host product in a cloud computing service system, to solve defects of difficult management and weak business scalability in traditional physical host and Virtual Private Server (VPS) services. The server may also be a server of a distributed system, or a server combined with a blockchain.

It should be understood that operations may be re-ordered, added or deleted by using various forms of processes as shown above. For example, operations recorded in the application may be performed in parallel, or may be performed sequentially, or may be performed in different orders, as long as desired results of the technical solutions of the application may be achieved, which is not limited here.

The above specific implementations do not constitute limitation on the scope of protection of the application. It should be understood by those skilled in the art that various modifications, combinations, sub-combinations and replacements may be made according to design requirements and other factors. Any modification, equivalent replacement, improvement or the like made within the spirit and principle of the application should be included in the scope of protection of the application.

### Industrial Applicability

The application discloses a method, apparatus and system for key management, a device, and a storage medium. The method is applied to a network side device, and the method includes the following operations. A key acquisition request sent by a terminal device is acquired. Security verification is performed on the key acquisition request. A login key of a first device is updated to a first key, in response to the key acquisition request passing the security verification. The first key is sent to the terminal device. With implementation of the technical solutions of the application, it is possible to achieve that the same device is controlled by different users using different keys respectively, and key leakage is effectively prevented, thereby achieving key authorization management with a high security.

## Claims

1. A method for key management, applied to a terminal device, the method comprising:
sending a key acquisition request to a network side device, wherein the key acquisition request is used by the network side device to update a login key of a first device to a first key, after the key acquisition request passes security verification; and
acquiring the first key sent by the network side device.

2. The method of claim 1, further comprising:
sending a key application information to the network side device; and
receiving a key acquisition link sent by the network side device, wherein the key acquisition link is generated by the network side device in response to the key application information, after the key application information passes risk control analysis of the network side device,
correspondingly, sending the key acquisition request to the network side device comprises:
sending the key acquisition request to the network side device, when an operation on the key acquisition link is detected.

3. The method of claim 2, wherein the key application information comprises at least one of:
a first identifier information of a first object, wherein the first object is an object submitting the key application information through the terminal device;
an identification information of the first device;
a first login account of the first device;
a control start time of controlling the first device; or
a control duration of controlling the first device.

4. The method of claim 2, wherein the key acquisition link is attached with an encrypted identifier, and sending the key acquisition request to the network side device comprises:
performing a hash calculation based on the encrypted identifier, to obtain a first hash value;
signing the first hash value based on a preset public key, to acquire a digital signature; and
sending the encrypted identifier and/or the digital signature as the key acquisition request to the network side device.

5. The method of claim 1, wherein acquiring the first key sent by the network side device comprises:
acquiring the first key sent by the network side device through a guaranteed delivery message.

6. The method of claim 1, further comprising:
decrypting the encrypted first key based on a Chinese national cryptographic algorithm, to obtain the first key;
providing a display interface, wherein the display interface is configured to display the first key; and
deleting the first key, in response to the first key being known.

7. A method for key management, applied to a network side device, the method comprising:
acquiring a key acquisition request sent by a terminal device;
performing security verification on the key acquisition request;
updating a login key of a first device to a first key, in response to the key acquisition request passing the security verification; and
sending the first key to the terminal device.

8. The method of claim 7, wherein updating the login key of the first device to the first key comprises:
generating the first key;
creating a container instance;
modifying the login key of the first device to the first key, based on the container instance; and
destroying the container instance.

9. The method of claim 8, wherein generating the first key comprises:
acquiring a random number seed and a preset second key;
encrypting the second key based on the random number seed, to acquire an encrypted result; and
acquiring a message digest of the encrypted result, as the first key.

10. The method of claim 7, wherein sending the first key to the terminal device comprises:
encrypting the first key based on a Chinese national cryptographic algorithm; and
sending the encrypted first key to the terminal device, based on a guaranteed delivery message.

11. The method of claim 7, further comprising:
determining whether the first key has been used for logging into the first device; and
updating the login key of the first device to a third key, in response to the first key having been used for logging into the first device.

12. The method of claim 11, further comprising:
acquiring a key application information sent by the terminal device;
performing risk control analysis based on the key application information, to acquire a risk control analysis result;
generating a key acquisition link, in response to the risk control analysis result indicating that risk control is normal; and
sending the key acquisition link to the terminal device,
wherein there is an association relationship between the key acquisition request and the key acquisition link.

13. The method of claim 12, wherein the key application information comprises at least one of:
a first identifier information of a first object, wherein the first object is an object submitting the key application information through the terminal device;
an identification information of the first device;
a first login account of the first device;
a control start time of controlling the first device; or
a control duration of controlling the first device.

14. The method of claim 13, wherein determining whether the first key has been used for logging into the first device comprises:
acquiring a second login account sent by the first device; and
determining whether the first key has been used for logging into the first device, according to the first login account and the second login account.

15. The method of claim 13, wherein performing the risk control analysis based on the key application information comprises:
determining a controllable time period and a first device information of the first device according to the identification information;
determining whether the first object has authority to apply for a key, according to the first identifier information and the control duration;
determining an applicable operation duration of the first object and a second device information of an applicable operation device for the first object according to the first identifier information, in response to the first object having authority to apply for a key; and
performing the risk control analysis according to the control start time, the controllable time period, the applicable operation duration, the first device information and the second device information.

16. The method of claim 15, wherein determining the applicable operation duration of the first object and the second device information of the applicable operation device for the first object, according to the first identifier information comprises:
determining an association information of the first object according to the first identifier information;
determining a weight value based on the association information;
determining a target object level of the first object from a plurality of preset object levels according to the weight value, wherein each of the object levels corresponds to a different applicable operation duration and a different applicable operation device respectively; and
determining the applicable operation duration and the second device information according to the target object level.

17. The method of claim 16, wherein the association information comprises at least one of:
years of work experience of the first object;
an associated project information of the first object;
a project reuse information of the first object;
an own attribute information of the first object; or
an abnormal operation information of the first object.

18. The method of claim 13, wherein generating the key acquisition link comprises:
generating a first link, wherein the first link corresponds to a key acquisition entry;
generating an encrypted identifier based on the key application information;
attaching the encrypted identifier to the first link, to obtain the key acquisition link; and
sending the key acquisition link to the terminal device.

19. The method of claim 18, wherein the key acquisition request comprises at least one of a digital signature encrypted by using a preset public key, the encrypted identifier, or a second identifier information of the terminal device, and performing the security verification on the key acquisition request comprises:
performing identity authentication based on the second identifier information of the terminal device;
determining whether a sending time of the key acquisition request is in a preset validity period, in response to the second identifier information passing the identity authentication;
decrypting the encrypted digital signature based on a preset private key to acquire a first hash value, in response to the sending time of the key acquisition request being in the validity period;
performing a hash calculation based on the encrypted identifier, to acquire a second hash value;
matching the first hash value with the second hash value, to acquire a matching result; and
determining that the key acquisition request passes the security verification, in response to the matching result meeting a first condition.

20. A method for key management, applied to a first device, the method comprising:
in response to performing a login operation on the first device, sending a second login account corresponding to the login operation to the network side device, wherein the second login account is used by the network side device to update a login key of the first device to a first key, and determine whether the first key has been used for logging into the first device.

21. An apparatus for key management, applied to a network side device, the apparatus comprising:
a first acquisition module, configured to acquire a key acquisition request sent by a terminal device;
a verification module, configured to perform security verification on the key acquisition request;
a first processing module, configured to update a login key of a first device to a first key, in response to the key acquisition request passing the security verification; and
a first sending module, configured to send the first key to the terminal device.

22. An apparatus for key management, applied to a terminal device, the apparatus comprising:
a first sending module, configured to send a key acquisition request to a network side device, wherein the key acquisition request is used by the network side device to update a login key of a first device to a first key, after the key acquisition request passes security verification; and
a first receiving module, configured to receive the first key sent by the network side device.

23. An apparatus for key management, applied to a first device, the apparatus comprising:
a processing module, configured to in response to performing a login operation on the first device, send a second login account corresponding to the login operation to the network side device, wherein the second login account is used by the network side device to update a login key of the first device to a first key, and determine whether the first key has been used for logging into the first device.

24. A system for key management, comprising:
a network side device, configured to perform the method of any one of claims 7 to 19;
a terminal device, configured to perform the method of any one of claims 1 to 6; and
a first side device, configured to perform the method of claim 20.

25. An electronic device, comprising:
at least one processor; and
a memory, communicatively connected to the at least one processor,
wherein the memory has stored thereon instructions executable by the at least one processor, and the instructions are executed by the at least one processor to enable the at least one processor to perform the method for key management of any one of claims 1 to 6 or the method for key management of any one of claims 7 to 19 or the method for key management of claim 20.

26. A computer-readable storage medium, having stored thereon instructions, wherein the method of any one of claims 1 to 6 or the method of any one of claims 7 to 19 or the method of claim 20 is implemented when the instructions are executed.
